# EUROPEAN PATENT SPECIFICATION

(11) **EP 1 701 606 B1**
(45) Date of publication and mention of the grant of the patent: **23.05.2007**
(21) Application number: 05704542.9
(22) Date of filing: 10.01.2005
(51) Int. Cl.: A01C 9/02

(54) **DEVICE FOR PLANTING BULBOUS AND TUBEROUS PLANTS, IN PARTICULAR POTATOES**
VORRICHTUNG ZUM PFLANZEN VON ZWIEBEL- UND KNOLLENGEWÄCHSEN, INSBESONDERE KARTOFFELN
DISPOSITIF PERMETTANT DE PLANTER DES PLANTES A BULBE ET DES PLANTES A TUBERCULE, EN PARTICULIER DES POMMES DE TERRE

(30) Priority: 09.01.2004 NL 1025202
(43) Date of publication of application: 20.09.2006
(73) Proprietor: Miedema Landbouwwerktuigenfabriek B.V., 8831 XA Winsum (NL)
(72) Inventor: LERINK, Peter, NL-3271 AJ Mijnsheerenland (NL); BUITENWERF, Hendrik, NL-6706 CK Wageningen (NL)
(74) Representative: Aalbers, Arnt Reinier
(86) International application number: PCT/NL2005/000011
(87) International publication number: WO 2005/065441

(56) References cited:
- DE-A- 1 954 171
- DE-B- 2 366 111
- DE-C- 817 660
- GB-A- 681 315

## Description

The invention relates to a device for planting bulbous and tuberous plants, in particular potatoes, comprising a storage hopper for bulbs or tubers to be planted, a conveyor, preferably an endless belt, comprising parallel rows of elements, for example so-called cups, for receiving bulbs or tubers from the storage hopper and releasing said bulbs or tubers again, and a guide for guiding the released bulbs or tubers to a common delivery opening, for example above a trench under the device.

Previously, planting machines were usually provided with a chain on which one row of cups was mounted.

To increase the capacity, the machines were subsequently fitted with a cup belt comprising two rows of cups. An example of such a planting machine is shown in German Gebrauchsmuster No. 94 01 110.9.

Another example of a similar planting machine is shown in document GB-A-681 315.

In existing machines, guides are usually disposed under the two rows of cups, which guides impart a movement towards the centre to the bulbs or tubers that are being released. As a result, said bulbs or tubers are placed in line with each other in the middle of a trench formed under the device by means of a planting coulter.

The object of the invention is to further increase the capacity of the planting machine as referred to in the first paragraph.

In order to accomplish that object, the conveyor comprises at least three rows of such elements, and the device is configured in such a manner that differences between the times of fall of bulbs or tubers from different rows caused by differences in the height of fall and/or the resistance of fall are compensated by differences in the moment and/or the height at which the bulbs or tubers are released above the guide.

In the cultivation of plants, e.g. potatoes, not only the planting depth but also the position of the seed potatoes in the ridge, seen in the direction of movement and in a direction transversely thereto, is important for the development of the plants. The above aspects make it possible to increase the capacity without interfering with said position of the potatoes, especially in the direction of movement, too much.

Preferably, the rows of elements are offset relative to each other.

Thus, the moment at which the bulbs or tubers are released from a first row can be delayed or advanced in relation to the moment at which the bulbs or tubers are released from a second row, and variations in the height of fall and/or the resistance of fall can be compensated in a simple manner.

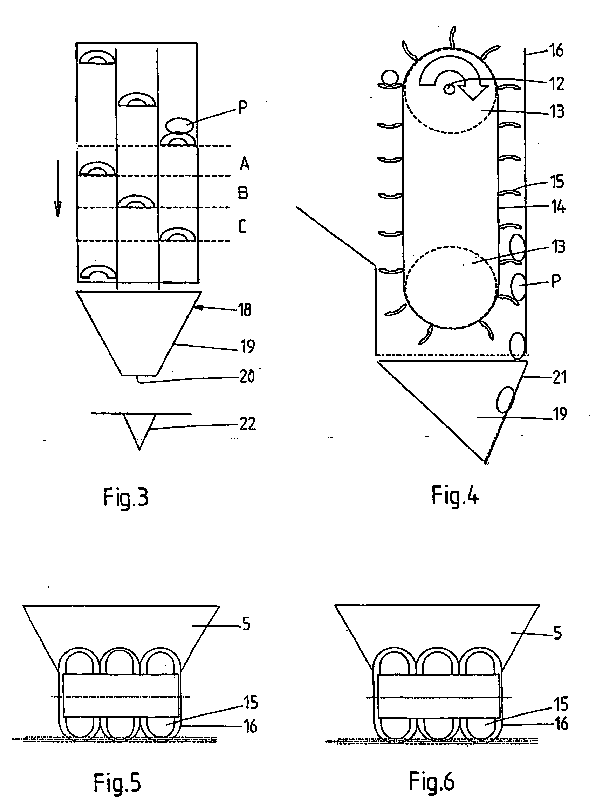

Furthermore it is preferable to provide a substantially symmetrical and centred guide, and preferably the distance (indicated "C" in the appended Fig. 3) between the elements in one of the outer rows and the next elements in at least one of the inner rows, seen in a direction opposed to the direction of transport of the belt, is larger than the distance (B) between the elements in said inner row and the next elements in the other outer row (C>B). The average (B+C)/2) of the aforesaid distances is preferably substantially equal to the shortest distance (A) between the elements in one outer row and those in the other outer row.

In these configurations, the moment at which the bulbs or tubers are released from an inner row is delayed in relation to the moment at which the bulbs or tubers are released from one outer row and, quite the contrary, advanced in relation to the moment at which the bulbs or tubers are released from the other outer row.

In an alternative embodiment, the elements present in the channels and/or the channels that surround said elements, the so-called planting channels, are configured to be different from each other in at least two rows. For example, by configuring the elements in at least one of the outer rows and/or the diameter of at least one of the channels of the outer rows to be smaller or larger than those in the inner row or rows, the moment at which the bulbs or tubers fall from said outer channel is advanced in relation to the moment at which the bulbs or tubers fall from the inner channel. This aspect makes it possible to increase or decrease the height from which the bulbs or tubers fall from the channels by adapting the aforesaid dimension(s) to a sufficient extent.

To prevent the potatoes from bouncing, or at least reduce the extent to which this occurs, the guide preferably comprises a flexible material under at least one of the rows, such that when a bulb or tuber comes into contact with this material, the shock is absorbed and the bulb or tuber glides downwards.

Generally, the rows lying side by side preferably extend jointly in a direction transversely to, at least not in line with, the direction of movement of the device for planting bulbous and tuberous crops.

The invention will now be explained in more detail with reference to the figures, which schematically show preferred embodiments of the present invention.

Fig. 1 is a side elevation of a device according to the invention, comprising a planting element.

Fig. 2 is a cross-sectional top plan view of the planting element of Fig. 1.

Figs. 3 and 4 are a schematic front view and a schematic longitudinal sectional view of a planting element according to the invention.

Figs. 5 and 6 are schematic, cross-sectional top plan views of two further embodiments of the planting element according to the invention.

Identical parts and parts having the same or substantially the same function are indicated by identical numerals.

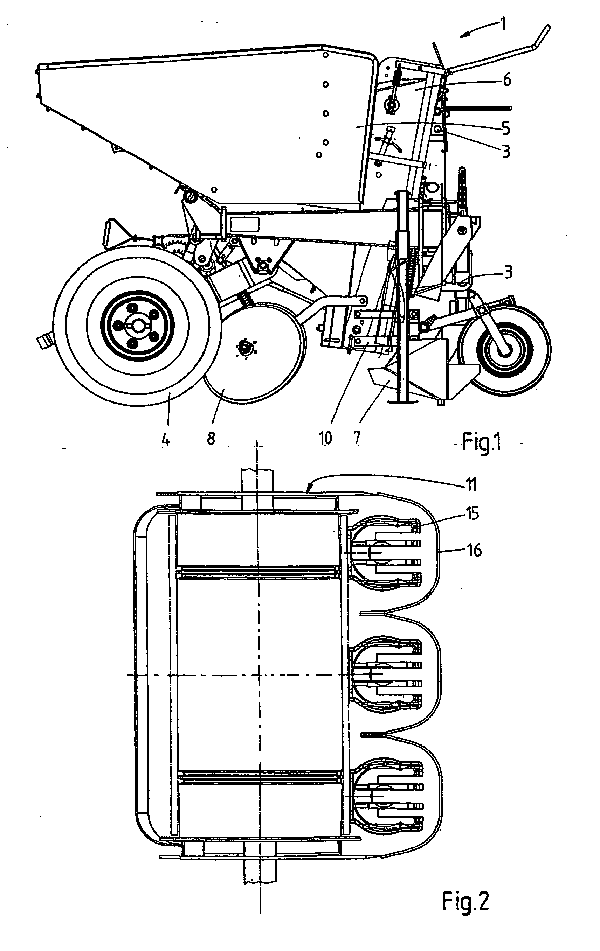

Fig. 1 shows an example of a planting machine 1 according to the invention, by means of which four rows of seed material, in this case potatoes P, for example, can be planted in one operation. The planting machine 1 comprises a frame 2, which can be coupled to a tractor (not shown) by means of a three-point linkage that is known per se, and which is furthermore supported by ground wheels 4. In this specific embodiment, a storage hopper 5 for potatoes to be planted and four (substantially vertical) planting elements 6 are mounted on and in the frame 2, which planting elements are all provided with a delivery opening (indicated at 20 in Fig. 3) at their bottom sides. A planting coulter 7, also referred to as furrow or trench opener, is mounted under the frame, in front of each of said openings.

Disposed behind each of the planting coulters 7, substantially in line therewith, are a pair of covering discs 8, which function to cover a trench formed by means of the planting coulter 7. The frame 2 further comprises parallelogram mechanisms 10, by means of which the planting depth can be adjusted and be maintained at the adjusted value. For details about this mechanism reference can be had to Dutch patent No. 1014692.

Figs, 2-4 show different views of a planting element 6 as shown in Fig. 1, comprising a housing 11, two horizontal shafts 12, on which a drum 13 is mounted, and an endless belt 14, which is passed over the drums 13 and to which three vertical rows of cups 15 are attached. The lower drum 13 is driven proportionally to the speed of the planting machine 1 by means of a chain (not shown). The front side of each of the planting elements 6 is provided with three parallel semi-tubes 16, which surround the respective rows of cups 15. I.e., inherent to this configuration is the fact that the rows that lie side by side extend jointly in a direction transversely to the direction of movement of the planting machine 1. A funnel-shaped, symmetrical guide 18 is disposed centrally below the planting element 6, the width of said guide at the upper side thereof being greater than or equal to the width of the belt 14, and the side walls 19 of said guide tapering off in downward direction, terminating in a common delivery opening 20. The front wall 21 of the guide 18 slopes towards the rear. The angle of said sloping wall 21 is adjustable from vertical to e.g. 45° in rearward direction.

During operation as shown in Fig. 4, the rear side of the belt 14 moves upwards, in such a manner that the cups 15 remove potatoes P from the storage hopper 5. After being turned upside down on the upper drum 13, the cups 15 move through the semi-tubes 16 at the front side of the planting elements 6. During this movement, the potatoes fall from their respective cups 15 onto the preceding cups 15. When the belt 14 reaches the lower drum 13, the cups 15 are turned upside down once again and the potatoes are released one by one. The potatoes fall into the guide 18, roll towards the delivery opening 20 and fall in the trench 22 under said delivery opening.

Fig. 3 shows the distances by which the cups 15 are spaced apart. The cups in one row are spaced a regular distance apart, which distance is the same for each row, viz. A+B+C, and preferably it is selected to be at least equal to or maximally 1.5 times larger than the distance that is used with the existing 2-cup belt (which is usually about 13 cm). Preferably, the value lies approximately halfway this range, so that on the one hand a higher capacity is achieved, given the same speed of the cup belt, whilst on the other hand an improved filling of the cups is achieved, because the filling interval between two cups in the same row is greater.

To ensure that the potatoes being planted will be in line with each other, the potatoes from the two outer planting channels must be moved over a relatively large distance towards the middle after exiting the planting channels. The potatoes exiting the outer channels must cover a longer distance, therefore, and experience more resistance, i.e. the time of fall before they hit the bottom of the pre-formed trench is longer.

To compensate for this difference in the time of fall between the potatoes from the middle channel and the potatoes from the outer channels, the middle row of cups is offset with respect to the outer rows.

The difference between the aforesaid distances A, B, and C that is optimal for specific circumstances must be determined by experiment, it depends inter alia on the shape and the material properties of the guide 18, i.e. on the speed with which the released potatoes slide through the guide 18. In this example, the distance C between the cups 15 in the right-hand row and the next cups in the middle row is larger than the distance B between the cups 15 in said middle row and the next cups 15 in the left-hand row. Furthermore, said distances, C and B, are larger and smaller, respectively, than the distance A between the cups 15 in the left-hand row and the next cups 15 in the right-hand row.

Thus, the moment at which the potatoes are released from a middle row is delayed in relation to the moment at which the potatoes are released from the right-hand row and, quite the contrary, advanced in relation to the moment at which the potatoes are released from the left-hand row.

A comparable result is obtained with the embodiment that is shown in Fig. 5. In this embodiment, the distances A, B and C between the cups 15 are identical, but the cups 15 in the middle row are longer than the cups 15 in the left-hand row and the right-hand row. As a result, the clearance between the cups 16 in the middle row and the respective semi-tube 16 will be large enough at a later moment to release the potato. In the embodiment that is shown in Fig. 6, the moment at which the potatoes in the middle row of cups 15 are released is delayed in that the diameter of the middle semi-tube 16 is smaller than the diameter of the left-hand tube 16 and the right-hand tube 16.

To reduce the extent to which bouncing of the released potatoes occurs, and at least slightly suppress uncontrolled variations in the time of fall for each potato, it is preferable for at least the side walls 19, and possibly also the aforesaid sloping wall 21, to be made of a flexible material. Suitable materials are, for example, gauze, cloth, either woven or nonwoven, and foil.

The sloping wall 21 furthermore guides the potatoes in a rearward direction, i.e. in a direction opposed to the direction of movement of the planting machine. As a result, the forward speed of the planting machine is partially compensated and the potatoes will hit the ground at a lower speed.

The invention is not limited to the embodiments as described above, which can be varied in many ways within the scope of the invention as defined in the claims. Thus it is possible to provide a separate belt and separate drums for each row instead of a common belt (14) and common drums (30). The height of the rows of cups and thus the height at which the bulbs or tubers are released from said rows can be freely selected for each individual row in that case.

Furthermore, the planting elements may comprise four or more rows of cups. Moreover, an asymmetrical guide may be used, in which case the moment and/or the height at which the bulbs or tubers are released above the guide can be adapted to such a guide again.

## Claims

1. A device (1) for planting bulbous and tuberous plants, in particular potatoes, comprising a storage hopper (5) for bulbs or tubers to be planted, a conveyor (13, 14) comprising parallel rows of elements (15) for receiving potatoes from the storage hopper (5) and releasing said potatoes again, and a guide (18) for guiding the released bulbs or tubers to a common delivery opening (20), **characterized in that** the conveyor (13, 14) comprises at least three rows of such elements (15), and **in that** the device (1) is configured in such a manner that differences between the times of fall of bulbs or tubers from different rows are compensated by differences in the moment and/or the height at which the bulbs or tubers are released above the guide (18).

2. A device (1) according to claim 1, wherein said rows of elements (15) are offset relative to each other (A ≠ B ≠ C).

3. A device (1) according to claim 1 or 2, which is provided with a substantially symmetrical and centred guide (18), wherein the distance (C) between the elements (15) in one of the outer rows and the next elements (15) in at least one of the inner rows is larger than the distance (B) between the elements (15) in said inner row and the next elements (15) in the other outer row (C>B).

4. A device (1) according to claim 3, wherein the average (B+C)/2) of the aforesaid distances is substantially equal to the shortest distance (A) between the elements (15) in one outer row and those in the other outer row.

5. A device (1) according to any one of the preceding claims, wherein the elements (15) for receiving bulbs or tubers are surrounded by channels (16), and wherein the elements (15) in the channels (16) and/or the channels (16) associated with at least two rows are configured to be different from each other.

6. A device (1) according to claim 5, wherein the elements (15) in at least one of the outer rows and/or the diameter of at least one of the channels (16) of the outer rows is (are) configured to be smaller or larger than those in the inner row or rows.

7. A device (1) according to any one of the preceding claims, wherein the conveyor (13, 14) comprises exactly three rows of elements (15).

8. A device (1) according to any one of the preceding claims, wherein said guide (18) comprises a flexible material under at least one of the rows, such that when a bulb or tuber comes into contact with this material, the shock is absorbed and the potato glides downwards.

9. A device (1) according to claim 8, wherein said material comprises a cloth or a foil.

10. A device (1) according to any one of the preceding claims, wherein said guide (18) comprises a sloping wall (21), by means of which the bulbs or tubers are guided in a rearward direction, i.e. in a direction opposed to the direction of movement of the device (1).

11. A device (1) according to claim 10, wherein the angle of said sloping wall (21) is adjustable.

## Patentansprüche

1. Vorrichtung (1) zum Pflanzen von Zwiebel- und Knollengewächsen, insbesondere Kartoffeln, aufweisend: einen Vorratstrichter (5) für Knollen oder Zwiebeln, die gepflanzt werden sollen, eine Transportvorrichtung (13, 14), die parallele Reihen von Elementen (15) zum Aufnehmen der Kartoffeln vom Vorratstrichter (5) und zum wieder Abgeben dieser Kartoffeln aufweist, und eine Führung (18) zum Führen dieser Knollen und Zwiebeln zu einer herkömmlichen Abgabeöffnung (20), **dadurch gekennzeichnet, dass** die Transportvorrichtung (13, 14) zumindest drei Reihe solcher Elemente (15) aufweist, und dass die Vorrichtung (1) in solch einer Weise konfiguriert ist, dass Unterschiede zwischen den Zeitpunkten des Fallens der Zwiebeln oder Knollen von verschiedenen Reihen durch Unterschiede im Moment und/oder der Höhe kompensiert werden, zu welchen die Knollen und Zwiebeln über die Führung (18) abgegeben werden.

2. Vorrichtung (1) gemäß Anspruch 1, wobei besagte Reihen von Elementen (15) relativ zueinander versetzt sind (A ≠ B≠ C).

3. Vorrichtung (1) gemäß Anspruch 1 oder 2, die mit einer im Wesentlichen symmetrischen und zentrierten Führung (18) versehen ist, wobei der Abstand (C) zwischen den Elementen (15) in der einen äußeren Reihen und dem nächsten Element (15) in zumindest einer der inneren Reihen größer ist als der Abstand (B) zwischen den Elementen (15) in dieser inneren Reihe und den nächsten Elementen (15) in der anderen äußeren Reihe (C > B)

4. Vorrichtung (1) gemäß Anspruch 3, wobei der Durchschnitt ((B+C)/2) der besagten Abstände im Wesentlichen gleich dem kleinsten Abstand (A) zwischen den Elementen (15) in der einen äußeren Reihe und denjenigen in der anderen äußeren Reihe ist.

5. Vorrichtung (1) gemäß einem der vorangegangenen Ansprüche, wobei die Elemente (15) zum Aufnehmen der Zwiebeln oder Knollen von Kanälen (16) umgeben sind, und wobei die Elemente (15) in den Kanälen (16) und/oder die Kanäle (16), die zu zumindest zwei Reihen zugeordnet sind, unterschiedlich zueinander konfiguriert sind.

6. Vorrichtung (1) gemäß Anspruch 5, wobei die Elemente (15) in wenigstens einer der äußeren Reihen und/oder der Durchmesser von wenigstens einem der Kanäle (16) der äußeren Reihen schmaler oder breiter als die der inneren Reihe oder Reihen sind.

7. Vorrichtung (1) gemäß einem der vorangegangenen Ansprüche, wobei der Förderer (13, 14) genau drei Reihen von Elementen (15) aufweist.

8. Vorrichtung (1) gemäß einem der vorangegangenen Ansprüche, wobei die Führung (18) ein flexibles Material unter zumindest einer der Reihen aufweist, sodass, wenn eine Zwiebel oder Knolle in Kontakt mit diesem Material kommt, der Aufprall absorbiert wird und die Kartoffel nach unten gleitet.

9. Vorrichtung gemäß Anspruch 8, wobei besagtes Material einen Stoff oder eine Folie aufweist.

10. Vorrichtung (1) gemäß einem der vorangegangenen Ansprüche, wobei die Führung (18) eine geneigte Wand (21) aufweist, durch welche die Knollen oder Zwiebeln nach hinten geführt werden, d.h., in eine Richtung entgegengesetzt zu der Bewegungsrichtung der Vorrichtung (1).

11. Vorrichtung (1) gemäß Anspruch 10, wobei der Winkel von besagter geneigter Wand (21) einstellbar ist.

## Revendications

1. Dispositif (1) pour planter des plantes à bulbe et à tubercule, en particulier des pommes de terre, comprenant une trémie de stockage (5) pour les bulbes ou les tubercules à planter, un transporteur (13, 14) comprenant des rangées parallèles d'éléments (15) destinés à recevoir des pommes de terre en provenance de la trémie de stockage (5) et à libérer de nouveau lesdites pommes de terre, et un guide (18) destiné à guider les bulbes ou tubercules libérés jusqu'à une ouverture de distribution commune (20), **caractérisé en ce que** le transporteur (13, 14) comprend au moins trois rangées de tels éléments (15) et **en ce que** le dispositif (1) est configuré de telle manière que les différences entre les temps de chute des bulbes ou tubercules provenant de différentes rangées soient compensées par des différences dans l'instant et/ou la hauteur auxquels les bulbes ou tubercules sont libérés au-dessus du guide (18).

2. Dispositif (1) selon la revendication 1, dans lequel lesdites rangées d'éléments (15) sont décalées l'une par rapport à l'autre (A ≠ B ≠ C).

3. Dispositif (1) selon la revendication 1 ou 2, qui est équipé d'un guide essentiellement symétrique et centré (18), dans lequel la distance (C) entre les éléments (15) dans une des rangées extérieures et les éléments suivants (15) dans au moins une des rangées intérieures est plus grande que la distance (B) entre les éléments (15) dans ladite rangée intérieure et les éléments suivants (15) dans l'autre rangée extérieure (C > B).

4. Dispositif (1) selon la revendication 3, dans lequel la moyenne (B+C)/2 des distances précitées est essentiellement égale à la plus courte distance (A) entre les éléments (15) dans une rangée extérieure et ceux dans l'autre rangée extérieure.

5. Dispositif selon l'une quelconque des revendications précédentes, dans lequel les éléments (15) destinés à recevoir des bulbes ou tubercules sont entourés de conduits (16) et dans lequel les éléments (15) dans les conduits (16) et/ou les conduits (16) associés à au moins deux rangées sont configurés de façon à être différents les uns des autres.

6. Dispositif (1) selon la revendication 5, dans lequel les éléments (15) dans au moins une des rangées extérieures et/ou le diamètre d'au moins un des conduits (16) des rangées extérieures est (sont) configuré de manière à être plus petit ou plus grand que ceux de la rangée ou des rangées intérieures.

7. Dispositif (1) selon l'une quelconque des revendications précédentes, dans lequel le transporteur (13, 14) comprend exactement trois rangées d'éléments (15).

8. Dispositif (1) selon l'une quelconque des revendications précédentes, dans lequel ledit guide (18) comprend une matière flexible sous au moins une des rangées, de manière que, lorsqu'un bulbe ou tubercule entre en contact avec cette matière, le choc est absorbé et la pomme de terre glisse vers le bas.

9. Dispositif (1) selon la revendication 8, dans lequel ladite matière comprend un tissu ou une feuille.

10. Dispositif (1) selon l'une quelconque des revendications précédentes, dans lequel ledit guide (18) comprend une paroi inclinée (21) au moyen de laquelle les bulbes ou tubercules sont guidés vers une direction arrière, c'est-à-dire dans une direction opposée à la direction du mouvement du dispositif (1).

11. Dispositif (1) selon la revendication 10, dans lequel l'angle de ladite paroi inclinée (21) est réglable.
